# EUROPEAN PATENT APPLICATION

(11) **EP 3 804 935 A1**
(43) Date of publication of application: **14.04.2021**
(21) Application number: 19810109.9
(22) Date of filing: 28.05.2019
(51) Int. Cl.: B29B 11/16, B29C 70/16, B29K 105/08

(54) **METHOD FOR PRODUCING CARBON RESIN COMPOSITE MATERIAL AND COMPOSITE STRUCTURE FOR PRODUCTION OF CARBON RESIN COMPOSITE MATERIAL**

(30) Priority: 31.05.2018 JP 2018104846
(71) Applicant: LINTEC CORPORATION, Itabashi-ku Tokyo 173-0001 (JP)
(72) Inventor: HAGIHARA, Yoshiaki, Tokyo 173-0001 (JP); OKUJI, Shigeto, Tokyo 173-0001 (JP)
(74) Representative: Dehns
(86) International application number: PCT/JP2019/021124
(87) International publication number: WO 2019/230729

(57) **Abstract**

Disclosed is a method of producing a carbon-resin composite material, the method including: the step of preparing a composite structure in which a carbon linear body containing a carbon material, and a resin linear body containing at least one of a thermoplastic resin or a thermosetting resin are regularly arranged; and the step of heating the composite structure.

## Description

### Technical Field

The present disclosure relates to: a method of producing a carbon-resin composite material; and a composite structure for producing a carbon-resin composite material.

### Background Art

Conventionally, carbon-resin composite materials (CFRP) composed of carbon fibers and a thermosetting resin (a resin obtained by curing a thermosetting resin such as an epoxy resin or a phenol resin) and carbon-resin composite materials (CFRTP) composed of carbon fibers and a thermoplastic resin (e.g., a polypropylene resin or a polyamide resin) are known (see, for example, Patent Documents 1 and 2).

These carbon-resin composite materials not only are lightweight but also have excellent mechanical properties (e.g., strength and rigidity), heat resistance and corrosion resistance. Accordingly, such carbon-resin composite materials have been utilized in a variety of fields (e.g., aviation, space industry, automobiles, railway vehicles, ships, civil engineering and construction, and sporting goods).

### Related Art Documents

### Patent Documents

[Patent Document 1] Japanese Patent Application Laid-Open (JP-A) No. 2017-132932
[Patent Document 2] Japanese National-Phase Publication (JP-A) No. 2017-082215
[Patent Document 3] Japanese National-Phase Publication (JP-A) No. 2007-518890

### SUMMARY OF INVENTION

### Technical Problem

Incidentally, in carbon-resin composite materials, since a single carbon fiber does not have sufficient strength, bundled fibers each obtained by binding about 1,000 to 10,000 carbon fibers with a binder are used. For example, when a prepreg is produced from a carbon fiber layer and a resin film using such bundled fibers as in Patent Document 2, the adhesion between the carbon fiber layer and the resin film at their interface cannot be improved, and the resulting prepreg thus tends to have a low strength against mechanical load in the thickness direction.

Meanwhile, technologies of opening the above-described bundled fibers have also been proposed (e.g., Patent Document 3). However, since the bundled fibers cannot be opened to a level of individual carbon fibers, it is difficult to impregnate a resin between the carbon fibers. Thus, gaps not impregnated with a resin are generated between the carbon fibers, and this tends to result in a variation in mechanical strength.

In view of the above, an object of the present disclosure is to provide: a method of producing a carbon-resin composite material in which variation in mechanical strength can be reduced and the mechanical strength against mechanical load in the thickness direction can be improved; and a composite structure for producing a carbon-resin composite material used for the method.

### Solution to Problem

The above-described problems are solved by the following means.

<1> A method of producing a carbon-resin composite material, the method including:
   a step of preparing a composite structure in which a carbon linear body containing a carbon material, and a resin linear body containing at least one of a thermoplastic resin or a thermosetting resin are regularly arranged; and
   a step of heating the composite structure.
<2> The method of producing a carbon-resin composite material according to <1>, wherein the step of preparing a composite structure comprises preparing a composite structure that includes a linear body obtained by twisting or doubling the carbon linear body and the resin linear body.
<3> The method of producing a carbon-resin composite material according to <1> or <2>, wherein the step of preparing a composite structure comprises preparing a composite structure that includes a woven fabric formed from the carbon linear body and the resin linear body.
<4> The method of producing a carbon-resin composite material according to <1> or <2>, wherein the step of preparing a composite structure comprises preparing a composite structure that includes a knitted fabric formed from the carbon linear body and the resin linear body.
<5> The method of producing a carbon-resin composite material according to any one of <1> to <4>, wherein the step of preparing a composite structure comprises preparing a composite structure that includes a wound body formed from the carbon linear body and the resin linear body.
<6> The method of producing a carbon-resin composite material according to any one of <1> to <5>, wherein the resin linear body includes at least a thermoplastic resin.
<7> The method of producing a carbon-resin composite material according to any one of <1> to <6>, wherein the carbon linear body is a linear body containing carbon nanotubes.
<8> The method of producing a carbon-resin composite material according to <7>, wherein the linear body containing carbon nanotubes is a linear body in which the carbon nanotubes are oriented along an axial direction of the linear body.
<9> The method of producing a carbon-resin composite material according to <7> or <8>, wherein, in the linear body containing carbon nanotubes, a ratio of the carbon nanotubes with respect to the linear body is 70% by mass or higher.
<10> A composite structure for producing a carbon-resin composite material, in which a carbon linear body containing a carbon material, and a resin linear body containing a thermoplastic resin or a thermosetting resin are regularly arranged.

### Effects of Invention

According to the disclosure, a method of producing a carbon-resin composite material in which variation in mechanical strength can be reduced and the mechanical strength against mechanical load in the thickness direction can be improved, and a composite structure for producing a carbon-resin composite material used for the method can be provided.

### BRIEF DESCRIPTION OF DRAWINGS

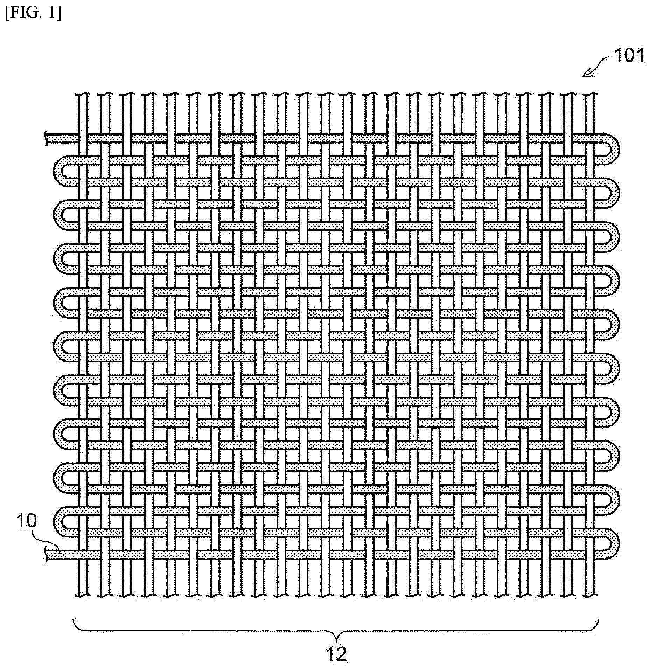

FIG. 1 is a schematic plan view that illustrates, in the carbon-resin composite material according to the present embodiment, one example of the woven fabric formed from the carbon linear body and the resin linear body (one example of the composite structure in which the carbon linear body and the resin linear body are regularly arranged);

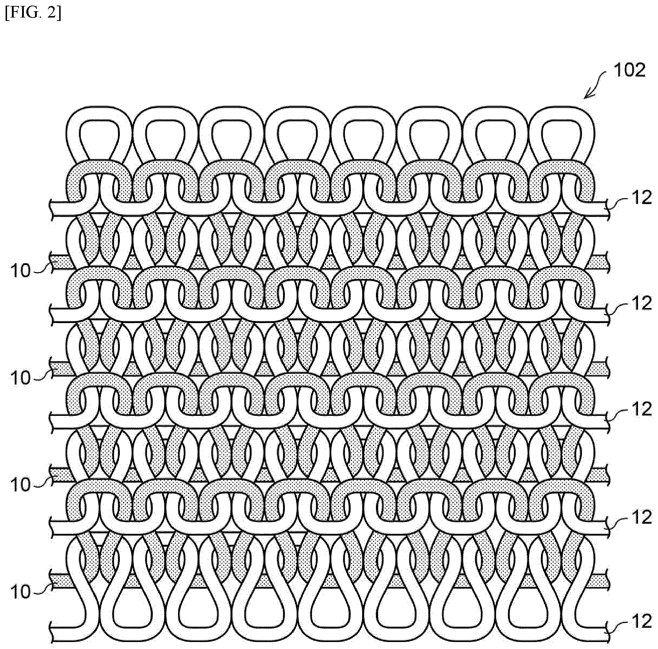

FIG. 2 is a schematic plan view that illustrates, in the carbon-resin composite material according to the present embodiment, one example of the knitted fabric formed from the carbon linear body and the resin linear body (another example of the composite structure in which the carbon linear body and the resin linear body are regularly arranged); and

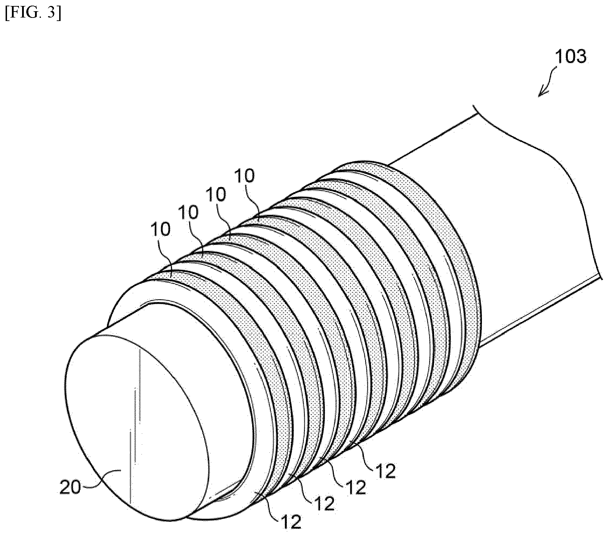

FIG. 3 is a schematic plan view that illustrates, in the carbon-resin composite material according to the present embodiment, one example of the wound body composed of the carbon linear body and the resin linear body (yet another example of the composite structure in which the carbon linear body and the resin linear body are regularly arranged).

### DESCRIPTION OF EMBODIMENTS

### Mode for Carrying Out the Invention

One exemplary embodiment of the disclosure is described below in detail.

In the present specification, the same symbols are assigned to members having substantially the same functions in all of the drawings, and redundant descriptions thereof may be omitted.

Those numerical ranges that are expressed with "to" each denote a range that includes the numerical values stated before and after "to" as the minimum value and the maximum value, respectively.

In the stepwise range of numerical values shown in this specification, an upper limit value or a lower limit value disclosed in a certain range of numerical values may be replaced with an upper limit value or a lower limit value of another stepwise range of numerical values. In addition, in the range of numerical values disclosed in this specification, an upper limit value or a lower limit value disclosed in a certain range of numerical values may be replaced with values shown in examples.

In this specification, a term "step" not only includes an independent step, but also includes a step, in a case where the step may not be distinguished from the other step, as long as the expected object of the step is achieved.

### <Method of Producing Carbon-Resin Composite Material>

The method of producing a carbon-resin composite material according to the present embodiment includes:
the step of preparing a composite structure in which a carbon linear body containing a carbon material, and a resin linear body containing at least one of a thermoplastic resin or a thermosetting resin are regularly arranged (hereinafter, this step is also referred to as "first step"); and
the step of heating the composite structure (hereinafter, this step is also referred to as "second step").

In the method of producing a carbon-resin composite material according to the present embodiment, a composite structure in which a carbon linear body and a resin linear body are regularly arranged is used. In other words, this composite structure is in a state where the resin linear body is regularly arranged with respect to the carbon linear body. When the composite structure is heated, the resin linear body is melted and gaps between carbon linear-bodies are readily filled with the resin linear body, so that gaps between carbon linear-bodies that are not filled with a resin are unlikely to be generated. Consequently, in the resulting carbon-resin composite material, the carbon linear body and the resin can be closely joined together.

In addition, the carbon linear body to be used is a continuous linear structure having no gap or only small gaps between carbon materials (e.g., carbon nanotubes or carbon fibers).

Therefore, in the method of producing a carbon-resin composite material according to the present embodiment, a carbon-resin composite material in which variation in mechanical strength can be reduced and the strength against mechanical load in the thickness direction can be improved is obtained.

The method of producing a carbon-resin composite material according to the present embodiment is described below in detail.

### (First Step)

In the first step, a composite structure in which a carbon linear body and a resin linear body are regularly arranged is prepared.

Examples of the composite structure include a composite structure in which one or more of each of the carbon linear body and the resin linear body are parallelly and alternately arranged, and a composite structure in which parallelly arranged carbon linear-bodies and parallelly arranged resin linear-bodies are arranged in an intersecting manner.

The composite structure may also be a structure in which separately prepared plural composite structures are disposed in layers.

The composite structure is desirably one which includes a linear body obtained by twisting or doubling the carbon linear body and the resin linear body. By twisting or doubling the carbon linear body and the resin linear body in advance, a carbon-resin composite material having higher mechanical strength, in which the carbon linear body and a resin are closely joined together, can be obtained.

The carbon linear body may be a carbon linear body obtained by twisting or doubling individual carbon linear-bodies, and the resin linear body may be a resin linear body obtained by twisting or doubling individual resin linear-bodies. The composite structure may also be one which includes: a linear body obtained by twisting or doubling the carbon linear body with the resin linear body; and at least one of a carbon linear body or a resin linear body in which these linear-bodies are not twisted or doubled with each other.

Examples of the composite structure also include: a composite structure having a woven fabric formed from the carbon linear body and the resin linear body; a composite structure having a knitted fabric formed from the carbon linear body and the resin linear body; and a composite structure having a wound body composed of the carbon linear body and the resin linear body. Moreover, the composite structure may also be, for example, a composite structure having at least two of such woven fabric, knitted fabric or wound body.

In a composite structure having at least one of such woven fabric, knitted fabric or wound body, the carbon linear body and the resin linear body are easily and regularly arranged at desired arrangement positions. Therefore, the mechanical strength of the resulting carbon-resin composite material in an arbitrary direction can be improved based on the arrangement positions.

Further, this composite structure has high shape stability in that the arrangement positions of the carbon linear body and the resin linear body are unlikely to collapse prior to the second step (the step of heating the composite structure).

The woven fabric may be any woven fabric obtained by plain weaving, twill weaving, satin weaving, a well-known applied weaving, or the like. The woven fabric may also be a laminated body of plural woven fabric layers.

Examples of the woven fabric include a woven fabric obtained by weaving either the carbon linear body or the resin linear body as a warp yarn and the other as a weft yarn (see FIG. 1). FIG. 1 illustrates one example of a woven fabric in which the carbon linear body and the resin linear body are woven as a warp yarn and a weft yarn, respectively (i.e., one example of the composite structure). In FIG. 1, "10" represents the carbon linear body, "12" represents the resin linear body, and "101" represents the woven fabric.

The woven fabric is not particularly restricted as long as it has a woven structure in which the carbon linear body and the resin linear body are regularly arranged.

The woven fabric may be, for example, one obtained by alternately weaving one or more of each of the carbon linear body and the resin linear body as warp and weft yarns, or one obtained by weaving either the carbon linear body or the resin linear body into a woven structure of the other.

The woven fabric may also be a woven fabric formed from a linear body obtained by twisting or doubling the carbon linear body and the resin linear body. In this case, the woven fabric according to the present embodiment can also be obtained by weaving only the linear body obtained by twisting or doubling the carbon linear body and the resin linear body, or the woven fabric may be a woven fabric formed from the linear body obtained by twisting or doubling the carbon linear body and the resin linear body, and at least one of the carbon linear body or the resin linear body that are not twisted or doubled with each other.

The knitted fabric may be any knitted fabric obtained by weft knitting, warp knitting, lace knitting, a well-known applied knitting, or the like. The knitted fabric may also be a laminated body of plural knitted fabric layers.

Examples of the knitted fabric include a knitted fabric obtained by alternately knitting one or more Hof each of the carbon linear body and the resin linear body, for example, in a course direction (see FIG. 2). It is noted here, however, that FIG. 2 illustrates one example of a knitted fabric in which a single carbon linear body and a single resin linear body are alternately knitted in a course direction (i.e., another example of the composite structure). In FIG. 2, "10" represents the carbon linear body, " 12" represents the resin linear body, and "102" represents the knitted fabric.

The knitted fabric is not particularly restricted as long as it has a knitted structure in which the carbon linear body and the resin linear body are regularly arranged.

The knitted fabric may be one in which the carbon linear body and the resin linear body are regularly arranged utilizing, for example, parallel knitting, plating knitting, or inlay knitting.

The knitted fabric may also be a knitted fabric formed from a linear body obtained by twisting or doubling the carbon linear body and the resin linear body. In this case, the knitted fabric according to the present embodiment can also be obtained by knitting only the linear body obtained by twisting or doubling the carbon linear body and the resin linear body, or the knitted fabric may be a knitted fabric formed from the linear body obtained by twisting or doubling the carbon linear body and the resin linear body, and at least one of the carbon linear body or the resin linear body that are not twisted or doubled with each other.

The wound body is a structure obtained by winding the carbon linear body and the resin linear body on a winding substrate (e.g., a cylindrical body, a polygonal columnar body, a cylindrical tubular body, a polygonal tubular body, or a plate body) and subsequently removing the winding substrate. After the removal of the winding substrate, the resulting wound body may be pressed into a sheet form. Alternatively, the resulting wound body may be cut-opened into a sheet form by cutting the wound body from one opening to the other opening. The cutting may be performed before or after the removal of the winding substrate. Further, the wound body may be a laminated body of plural sheet-form wound bodies as well.

Examples of the wound body include a wound body obtained by alternately arranging and spirally winding one or more of each of the carbon linear body and the resin linear body on a winding substrate (see FIG. 3). FIG. 3 illustrates one example of a wound body in which a single carbon linear body and a single resin linear body are alternately arranged and spirally wound on a winding substrate (i.e., yet another example of the composite structure). In FIG. 3, "10" represents the carbon linear body, "12" represents the resin linear body, "20" represents the winding substrate, and "103" represents the wound body.

The wound body is not particularly restricted as long as it has a structure in which the carbon linear body and the resin linear body are regularly arranged.

The wound body may be, for example, a wound body which has a layer formed by winding either the carbon linear body or the resin linear body on a winding substrate, and a layer formed by winding the other linear body thereon, or a wound body in which these two layers are alternately disposed on either other.

The wound body may also be a wound body of at least one of a woven fabric, which is composed of a linear body obtained by twisting or doubling the carbon linear body and the resin linear body, the carbon linear body and the resin linear body, and a knitted fabric formed from the carbon linear body and the resin linear body.

Specifically, for example, the wound body may be a wound body obtained by winding, on a winding substrate, at least one of a belt-form woven fabric a belt-form knitted fabric that is/are prepared in advance, and subsequently pulling out the winding substrate.

In the composite structure, the diameter of the resin linear body may be larger or smaller than the diameter of the carbon linear body.

By adjusting the diameter of the carbon linear body and that of the resin linear body, the below-described volume ratio of the carbon linear body and the resin linear body can be easily adjusted.

In the composite structure, the volume ratio of the carbon linear body and the resin linear body (carbon linear body/resin linear body) is preferably from 10/90 to 80/20, more preferably from 30/70 to 70/30.

The volume of the carbon linear body and that of the resin linear body are selected in accordance with the volume ratio of the carbon linear body and the resin in the desired carbon-resin composite material.

### -Carbon Linear body-

The carbon linear body is a carbon linear body containing a carbon material. Examples of the carbon material include carbon fibers and carbon nanotubes.

The carbon linear body is preferably a linear body that contains carbon nanotubes (yarns utilizing carbon nanotubes) (such a linear body is hereinafter also referred to as "carbon nanotube linear body"). When a carbon nanotube linear body is used as the carbon linear body, a carbon-resin composite material having higher mechanical strength can be obtained as compared to when a linear body containing carbon fibers is used. In addition, a carbon nanotube linear body is advantageous in that it has higher flexibility than a linear body containing carbon fibers and, therefore, can yield a woven fabric, a knitted fabric or the like without being broken.

As the carbon linear body, a linear body containing carbon fibers may be used in combination with a carbon nanotube linear body. The use of a combination of a carbon nanotube linear body and a linear body containing carbon fibers is advantageous in that, since it yields a long and thin yarn, not only high tensile strength attributed to the carbon fibers but also an effect attributed to the carbon nanotube linear body, which is an effect of further improving the mechanical strength in the thickness direction, can both be attained.

A carbon nanotube linear body can be obtained by, for example drawing carbon nanotubes into a sheet form from an edge of a carbon nanotube forest (i.e., a growth body sometimes referred to as "array", which is produced by growing plural carbon nanotubes on a substrate such that the carbon nanotubes are vertically oriented with respect to the substrate), bundling the thus drawn carbon nanotube sheet, and then twisting the resulting carbon nanotube bundle. In this production method, a ribbon-form carbon nanotube linear body is obtained when no torsion is added during the twisting, while a thread-form linear body is obtained when torsion is added during the twisting. The ribbon-form carbon nanotube linear body is a linear body that does not have a structure in which carbon nanotubes are distorted. In addition, a carbon nanotube linear body can also be obtained by, for example, spinning from a dispersion of carbon nanotubes. The production of a carbon nanotube linear body by spinning can be performed in accordance with, for example, the method disclosed in US Patent Publication No. 2013/0251619 (JP-ANo. 2011-253140). From the standpoint of obtaining a carbon nanotube linear body having a uniform diameter, it is desirable to use a thread-form carbon nanotube linear body and, from the standpoint of obtaining a high-purity carbon nanotube linear body, it is preferred to obtain a thread-form carbon nanotube linear body by twisting a carbon nanotube sheet. The carbon nanotube linear body may also be a linear body in which two or more carbon nanotube linear-bodies are twisted together.

The carbon nanotube linear body is desirably a linear body in which carbon nanotubes are oriented along the axial direction of the linear body. When a carbon nanotube linear body in which carbon nanotubes are oriented along the axial direction of the linear body is used, the mechanical strength of the linear body is increased, as a result of which a carbon-resin composite material having high mechanical strength is likely to be obtained.

A carbon nanotube linear body in which carbon nanotubes are oriented along the axial direction of the linear body can be obtained by drawing carbon nanotubes into a sheet form from an edge of a carbon nanotube forest, bundling the thus drawn carbon nanotube sheet, and then twisting, or twisting and distorting the resulting carbon nanotube bundle.

In the carbon nanotube linear body, the ratio of the carbon nanotubes with respect to the linear body is preferably 70% by mass or higher (more preferably 90% by mass or higher). When the ratio of the carbon nanotubes is 70% by mass or higher, the mechanical strength of the carbon nanotube linear body is increased, as a result of which a carbon-resin composite material having high mechanical strength is likely to be obtained.

The carbon linear body may also contain an additive that enhances the joining of the carbon linear body with the resin after the melting and solidification, or after the melting and curing of the resin linear body (e.g., UMEX (registered trademark) Series manufactured by Sanyo Chemical Industries, Inc. (maleic anhydride-modified polypropylene) or the like when the resin linear body contains a polyolefin-based resin).

### -Resin Linear body-

The resin linear body is a resin linear body that contains at least one of a thermoplastic resin or a thermosetting resin. In other words, the resin linear body may contain either a thermoplastic resin or a thermosetting resin, or may contain both a thermoplastic resin and a thermosetting resin. When the resin linear body contains a thermosetting resin, it is desired that the linear body further contains a heat-curing agent.

Examples of the thermoplastic resin include well-known resins, such as polyolefin resins, polyester resins, polyacrylic resins, polystyrene resins, polyimide resins, polyimide amide resins, polyamide resins, polyurethane resins, polycarbonate resins, polyarylate resins, phenoxy resins, urethane resins, silicone resins, and fluorocarbon resins; and layers containing a mixed resin of two or more of the above-described well-known resins.

Examples of the thermosetting resins include layers of well-known compositions, such as epoxy resin compositions, resin compositions cured by urethane reaction, and resin compositions cured by radical polymerization reaction.

Examples of the epoxy resin compositions include combinations of an epoxy resin, such as a polyfunctional epoxy resin, a bisphenol A-type epoxy resin, a bisphenol F-type epoxy resin, a biphenyl-type epoxy resin or a dicyclopentadiene-type epoxy resin, and a curing agent such as an amine compound or a phenolic curing agent.

Examples of the resin compositions cured by urethane reaction include resin compositions containing a (meth)acrylic polyol and a polyisocyanate compound.

Examples of the resin compositions cured by radical polymerization reaction include radical-polymerizable resin compositions containing a (meth)acryloyl group, an unsaturated polyester and the like, such as (meth)acrylic resins having a radical polymerizable group on a side chain (e.g., (meth)acrylic resins obtained by allowing a polymer of a reactive group-containing vinyl monomer (e.g., hydroxy (meth)acrylate or glycidyl (meth)acrylate) to react with a monomer that has a group reactive with the reactive group of the copolymer along with a radical-polymerizable group (e.g., (meth)acrylic acid or isocyanate group-containing (meth)acrylate)), (meth)acryl group-containing epoxy acrylates obtained by allowing (meth)acrylic acid or the like to react with a terminal of an epoxy resin, and unsaturated polyesters obtained by condensation of an unsaturated group-containing carboxylic acid (e.g., fumaric acid) with a diol.

Thereamong, the resin linear body is preferably a resin linear body that contains at least a thermoplastic resin.

For example, in cases where a carbon-resin composition material (e.g., a three-dimensional carbon-resin composite material) is produced by applying, as the composite structure, a structure in which separately prepared plural composite structures are disposed in layers, the use of a resin linear body containing a thermoplastic resin is advantageous in that the separately prepared plural composite structures are easily joined together and that they are joined more strongly than in a prepreg containing carbon fiber layers.

Further, the use of a resin linear body containing a thermoplastic resin is also advantageous in that it can also improve the productivity and the recyclability of the resulting carbon-resin composite material.

Usually, as compared to thermosetting resins that can be imparted with fluidity prior to being cured, it is harder to fill a thermoplastic resin into gaps; however, by adopting the above-described constitution for the composite structure, since the gaps between carbon linear-bodies are sufficiently filled with the thermoplastic resin when the composite structure is heated, a carbon-resin composite material having high strength can be obtained even with the use of a resin linear body containing a thermoplastic resin.

The resin linear body may also contain an additive that enhances the joining of its resin with the carbon linear body at least one of after the melting and solidification or after the melting and curing of the resin linear body (e.g., UMEX (registered trademark) Series manufactured by Sanyo Chemical Industries, Inc. or the like when the resin linear body contains a polyolefin-based resin).

### (Second Step)

In the second step, the composite structure is heated. Specifically, when the resin linear body contains a thermoplastic resin, in the second step, the composite structure is heated to melt the resin linear body, after which the thus molten resin linear body is solidified. Meanwhile, when the resin linear body contains a thermosetting resin, in the second step, the composite structure is heated to melt the resin linear body, after which the thus molten resin linear body is cured.

When the resin linear body contains both a thermoplastic resin and a thermosetting resin, in the second step, the resins are melted by heating, then solidified, and cured. It is noted here, however, that there are cases where curing of the molten resin linear body proceeds but a solidification phenomenon does not take place.

In the second step, the heating temperature and the heating time are set as appropriate in accordance with the resin species. In the second step, the composite structure may be heated while being molded (e.g., press molding).

By performing the above-described steps, a carbon-resin composite material in which variation in mechanical strength is reduced and, particularly, the strength against a mechanical load in the thickness direction can be improved, is obtained.

The description of symbols is provided as below.
101: woven fabric
102: knitted fabric
103: wound body
10: carbon linear body
12: resin linear body

The disclosure of Japanese Patent Application Laid-Open (JP-A) No. 2018-104846 cited in the present description are incorporated herein by reference in their entirety.

All publications, patent applications, and technical standards described herein are incorporated herein by reference in their entirety to the same extent as if the publications, patent applications, and technical standards have been written specifically and individually to be incorporated by reference.

## Claims

1. A method of producing a carbon-resin composite material, the method comprising:
a step of preparing a composite structure in which a carbon linear body containing a carbon material, and a resin linear body containing at least one of a thermoplastic resin or a thermosetting resin, are regularly arranged; and
a step of heating the composite structure.

2. The method of producing a carbon-resin composite material according to claim 1, wherein the step of preparing a composite structure comprises preparing a composite structure that includes a linear body obtained by twisting or doubling the carbon linear body and the resin linear body.

3. The method of producing a carbon-resin composite material according to claim 1 or 2, wherein the step of preparing a composite structure comprises preparing a composite structure that includes a woven fabric formed from the carbon linear body and the resin linear body.

4. The method of producing a carbon-resin composite material according to claim 1 or 2, wherein the step of preparing a composite structure comprises preparing a composite structure that includes a knitted fabric formed from the carbon linear body and the resin linear body.

5. The method of producing a carbon-resin composite material according to any one of claims 1 to 4, wherein the step of preparing a composite structure comprises preparing a composite structure that includes a wound body formed from the carbon linear body and the resin linear body.

6. The method of producing a carbon-resin composite material according to any one of claims 1 to 5, wherein the resin linear body includes at least a thermoplastic resin.

7. The method of producing a carbon-resin composite material according to any one of claims 1 to 6, wherein the carbon linear body is a linear body containing carbon nanotubes.

8. The method of producing a carbon-resin composite material according to claim 7, wherein, in the linear body containing carbon nanotubes, the carbon nanotubes are oriented along an axial direction of the linear body.

9. The method of producing a carbon-resin composite material according to claim 7 or 8, wherein, in the linear body containing carbon nanotubes, a ratio of the carbon nanotubes with respect to the linear body is 70% by mass or higher.

10. A composite structure for producing a carbon-resin composite material, in which a carbon linear body containing a carbon material, and a resin linear body containing a thermoplastic resin or a thermosetting resin, are regularly arranged.
